(19) Europäisches Patentamt

European Patent Office

Office européen des brevets

(11) **EP 1 168 848 A2**

(12) **EUROPEAN PATENT APPLICATION**

(43) Date of publication:
**02.01.2002 Bulletin 2002/01**

(51) Int Cl.⁷: **H04N 9/30**

(21) Application number: **01301103.6**

(22) Date of filing: **08.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.06.2000 JP 2000196261**

(71) Applicant: **Hitachi, Ltd.**
**Chiyoda-ku, Tokyo (JP)**

(72) Inventors:
 • **Naka, Kazutaka, c/o Hitachi Ltd., Int. Prop. Group**
  **Chiyoda-ku, Tokyo 100-8220 (JP)**
 • **Maruyama, Atsushi, c/o Hitachi Ltd., Int. Prop.Gr.**
  **Chiyoda-ku, Tokyo 100-8220 (JP)**
 • **Haruna, Fumio, c/o Hitachi Ltd., Int. Prop. Group**
  **Chiyoda-ku, Tokyo 100-8220 (JP)**

(74) Representative: **Hackney, Nigel John et al**
 **Mewburn Ellis, York House, 23 Kingsway**
 **London WC2B 6HP (GB)**

(54) **Color display apparatus**

(57)     There is provided an inexpensive display apparatus (9) of high image quality which conducts video signal display of high resolution by using liquid crystal panels of low resolution. Four liquid crystal panels corresponding to R, G and B basic pixels (100) as well as W (white) pixels (200) are used. The additional W pixels are shifted from the R, G and B basic pixels so as to form a quincunx pattern, and optical combining is conducted. As for low resolution information, full color display using basic pixels is conducted. As for high resolution information exceeding this, only luminance information (Yh) is displayed by using white pixels obtained by combining the R, G and B basic pixels and using the additional W pixels.

FIG.4

EP 1 168 848 A2

**Description**

The present invention relates to a display apparatus of a video signal, and in particular to a color display apparatus for conducting display by optically combining R (red), G (green) and B (blue) pixels while taking a pixel as the unit.

As one of typical color display apparatuses for conducting display by using a display panel of liquid crystal or the like corresponding to the three primary colors R, G and B and optically combining the three primary colors in a display section while taking a pixel as the unit, there is a three-panel type liquid crystal projector. The three-panel type liquid crystal projector has independent liquid crystal panels respectively for R, G and B each of which can be controlled in transmission factor or reflection factor according to an input signal while taking a pixel as the unit. By controlling the quantity of emitted light for R, G and B light sources while taking a pixel as the unit, the three-panel type liquid crystal projector displays a color image on a screen. Pixels controlled by the R, G and B liquid crystal panels are optically combined so as to superimpose on the same location on the screen. As a result, a full color image is displayed with a resolution depending upon the number of pixels of each liquid crystal panel.

As elements for controlling the quantity of emitted light while taking a pixel as the unit (hereafter referred to as optical control elements), the conventional liquid crystal, reflective liquid crystal, and digital micromirror device (DVD) are used depending upon respective applications. In some cases, three independent light sources of R, G and B are provided. In many configurations, however, R, G and B light beams are generated by spectral diffraction of light from the white light source conducted by a dichroic mirror or the like. Furthermore, in a frequently used configuration, quantities of emitted light are controlled by independent R, G and B display elements while taking a pixel as the unit, optically recombined, and displayed on the screen by using one system of projection lenses.

Furthermore, in these display apparatuses, there are included a display apparatus of back projection type in which projection is conducted from the rear side of the screen of the display section, and a display apparatus of front projection type in which a display section is not included and from a projection lens of which a video signal is displayed onto an external screen. In display apparatuses of both types, R, G and B emitted light beams are optically combined to conduct display while taking a pixel as the unit on the display section (screen).

In these display apparatuses, the resolution of a displayed image is determined by optical control elements such as liquid crystal panels in use. When displaying an input video signal exceeding the resolution of the optical control elements, the resolution is lowered and display is conducted. In general, as the resolution of the optical control elements becomes higher, the area of the elements increases and fine processes become necessary, and consequently a higher technique is needed in order to obtain elements free from pixel defects. Therefore, optical control elements of high resolution are expensive. It is difficult to implement a display apparatus of high resolution at a low price. For example, in the case where optical control elements each having 640 pixels in the horizontal direction and 480 lines in the vertical direction for displaying the conventional NTSC signal or VGA signal is used, the NTSC signal or VGA signal can be displayed favorably. If it is attempted to display a hi-vision signal of high resolution, however, the resolution must be lowered remarkably in this case and it is impossible to implement high image quality display which can be conducted by only the hi-vision. If optical control elements each having 1280 pixels in the horizontal direction and 720 lines in the vertical direction or 1920 pixels in the horizontal direction and 1080 lines in the vertical direction are used, display of high image quality is possible. However, it is necessary to use three expensive optical control elements (R, G and B) of high resolution, and it is difficult to implement an inexpensive display apparatus.

SUMMARY OF THE INVENTION

Preferably, an object of the present invention is to provide an inexpensive display apparatus of high resolution.

In an aspect of the present invention, the following means are used:

1. To three optical control elements of R, G and B, one W (white) optical control element is added. Thus, four optical control elements are used.

The following numbered items are preferred features and separate aspects of the invention.
2. In a display section, R, G and B pixels are optically combined so as to superimpose on each other in the same position while taking a pixel as the unit. Optical combining is effected so as to display pixels of the W optical control element in a position shifted from the R, G and B pixels by Dh/2 in the horizontal direction, where Dh is a horizontal pixel pitch.
3. Input video signals are separated into low frequency components which can be displayed by the R, G and B optical control elements and high frequency components exceeding that. The low frequency components are displayed by using the R, G and B optical control elements in the conventional way. A luminance signal is generated from the high frequency components of R, G and B. On the basis of the luminance signal, display is effected by using the R, G and B optical control elements and the additional W optical control element.
4. Furthermore, in a display section, R, G and B pixels are optically combined so as to superimpose on each other in the same position while taking a pixel as the unit. Optical combining is effected so as to display pixels of the W optical control element in a position shifted from the R, G and B pixels by Dh/2 in the horizontal direction and shifted from the R, G and B pixels by Dv/2 in the vertical direction, where Dh is a horizontal pixel pitch and Dv is a vertical pixel pitch.

5. As a method for separating the input video signals into low frequency components which can be displayed by the R, G and B optical control elements and high frequency components exceeding that, a low pass filter (LPF) for the vertical direction and an LPF for the horizontal direction are connected in cascade.

6. In the process of generating the luminance signal from the high frequency components of R, G and B, a two-dimensional filter for decreasing the energy of the diagonal resolution component is used.

7. Furthermore, an optical combining system is provided with such a characteristic as to decrease the energy of the diagonal resolution component.

8. Switchover is conducted so as to conduct the display of only the R, G and B basic pixels when a computer image is inputted and so as to add the W pixels when a video signal such as a hi-vision signal is inputted.

BRIEF DESCRIPTION OF THE DRAWING

FIG. 1 is a diagram showing an arrangement of pixels 100 generated by R, G and B basic optical control elements on a display section 1 in first and second embodiments of the present invention;
FIG. 2 is a diagram showing positions of W pixels 200 added in the first embodiment of the present invention, on a display section 1;
FIG. 3 is a diagram showing an arrangement of pixels 100 and 200 in the first embodiment of the present invention, on a display section 1;
FIG. 4 is a block diagram showing a configuration of a signal processing circuit 3 in first and second embodiments;
FIGS. 5A, 5B, 5C and 5D are diagrams showing resolution versus display signal amplitude characteristics of optical control elements in a first embodiment of the present invention;
FIGS. 6A, 6B, 6C and 6D are diagrams showing operation of input pixels, thinning processing circuits 311, 312 and 313, and a switchover circuit 340 in a first embodiment of the present invention;
FIG. 7 is a diagram showing positions of W pixels 200 added in a second embodiment of the present invention, on a display section 1;
FIG. 8 is a diagram showing an arrangement of pixels 100 and 200 on a display section 1 in a second embodiment of the present invention;
FIG. 9 is a diagram showing operation of optical control elements in a second embodiment of the present invention, in a two-dimensional resolution plane;
FIG. 10 is a block diagram showing concrete configurations of frequency separation circuits 301, 302 and 303 shown in FIG. 4 of a second embodiment of the present invention;
FIG. 11 is a block diagram showing a concrete configuration of a luminance signal generation circuit 330 shown in FIG. 4 of a second embodiment of the present invention;
FIGS. 12A, 12B, 12C and 12D are diagrams showing operation of input pixels, thinning processing circuits 311, 312 and 313, and a switchover circuit 340 in a second embodiment of the present invention;
FIG. 13 is a block diagram showing a concrete configuration of a display apparatus of back projection type according to the present invention; and
FIG. 14 is a block diagram showing a concrete configuration of a display apparatus of front projection type according to the present invention.

DESCRIPTION OF THE EMBODIMENTS

Hereafter, a first embodiment of the present invention will be described. Mainly, a configuration for implementing a display apparatus using 640 by 480 (corresponding to VGA) liquid crystal elements as optical control elements and capable of conducting display equivalent to 1280 pixels by 480 lines which is twice in horizontal resolution will be described by referring to the drawing.

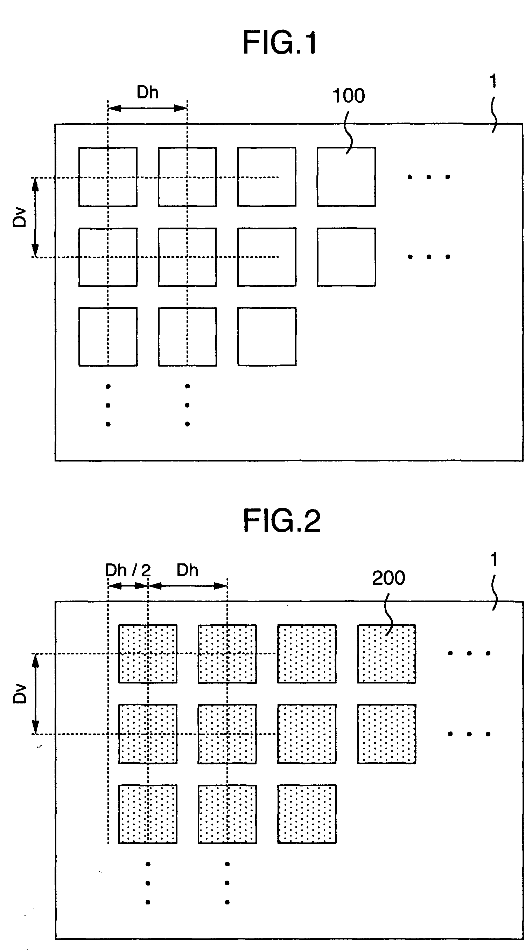

FIG. 1 shows an arrangement of pixels on a display section in a conventional display apparatus. Numeral 1 denotes a display section. Numeral 100 denotes a pixel. In a display apparatus such as the VGA, 640 pixels are arranged in the horizontal direction with a horizontal pixel pitch Dh and 480 pixels are arranged in the vertical direction with a vertical pixel pitch Dv. Pixels correspond to pixels of optical control elements corresponding to R, G and B. R, G and B images are optically combined and displayed in the same position so that pixels may overlap each other. As a result, display of a full color video signal having 640 pixels in the horizontal direction and 480 lines in the vertical direction becomes possible.
FIG. 2 shows positions of W (white color) pixels newly added according to the present invention, on a display section.
In FIG. 2, numeral 1 denotes a display section, and numeral 200 denotes a W pixel. W pixels 200 are displayed in positions shifted in the horizontal direction from the conventional R, G and B pixels 100 shown in FIG. 1 by Dh/2. The number of pixels in the horizontal direction and the number of lines in the vertical direction are the same as those (640 by 480) of the R, G and B pixels 100. Furthermore, the horizontal pixel pitch Dh and vertical pixel pitch Dv of W pixels are made equal to those of the R, G and B pixels 100.

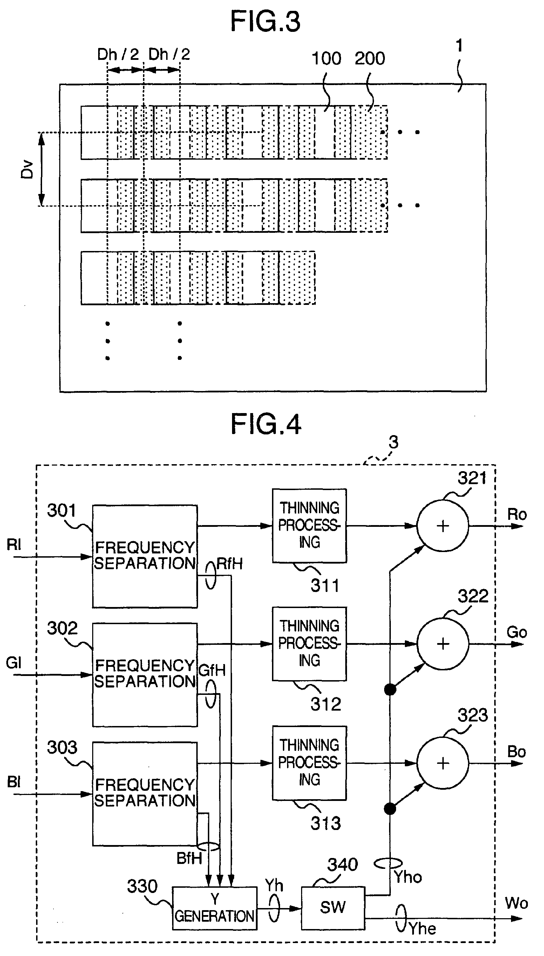

FIG. 3 shows an arrangement of pixels on a display section of a display apparatus according to the present invention. The R, G and B pixels 100 and the W pixels are arranged alternately in the horizontal direction with a pitch of Dh/2. As a result of this configuration, the number of pixels in the horizontal direction equivalently becomes 1280 (= 640 × 2). Since there is no change in the number of lines in the vertical direction, display of 1280 horizontal pixels by 480 lines becomes possible in the present embodiment.

FIG. 4 is a block diagram showing signal processing conducted when implementing high resolution display by using the pixel arrangement shown in FIG. 3. FIG. 4 shows a configuration of a signal processing circuit 3 for processing input signals RI, GI and BI respectively corresponding to red (R), green (G) and blue (B) and converting the input signals to display signals Ro, Go, Bo and Wo respectively for four optical control elements of R, G, B and W. By the way, the input signals RI, GI and BI are signals of 1280 horizontal pixels by 480 pixels, whereas the display signals Ro, Go, Bo and Wo are signals of 640 horizontal pixels by 480 pixels

In FIG. 4, numerals 301, 302 and 303 denote frequency separation circuits for conducting separation into a low frequency component (fL) corresponding to 640 by 480 lines which can be displayed by using the R, G and B panels, and a high frequency component (fH) exceeding that. Furthermore, numerals 311, 312, and 313 denote thinning processing circuits for thinning pixels of the low frequency component (fL) of the RI, GI and BI at a ratio of 2 to 1. Numeral 330 denotes a luminance signal generation circuit for generating a high frequency luminance signal Yh from RfH, GfH and BfH which are high frequency components (fH) respectively of the RI, GI and BI. Numeral 340 denotes a switchover circuit for switching the high frequency luminance signal Yh from even-numbered dots Yhe and odd-numbered dots Yho and vice versa. Numerals 321, 322 and 323 denote addition circuits for adding the odd-numbered dots Yho of the high frequency luminance signal to the display signal of the R, G and B panels.

In the frequency separation circuit 301, the video signal of 1280 horizontal pixels by 480 pixels inputted as RI is separated into the low frequency component fL which can be displayed by 640 pixels by 480 pixels and the high frequency component fH exceeding 640 by 480 pixels, by an LPF (low pass filter) provided in the frequency separation circuit 301. As for the low frequency component fL, pixels are then thinned in the thinning circuit 311 at a ratio of 2 to 1. As a result, the low frequency component fL is converted to a signal of 640 pixels by 480 pixels. As for processing of GI and BI as well, low frequency components fL which can be displayed in 640 pixels by 480 pixels are separated in the frequency separation circuits 302 and 303, and converted to signals of 640 pixels by 480 pixels by the thinning circuits 312 and 313, in the same way. On the other hand, high frequency components RfH, GfH and BfH separated from the RI, GI and BI by the frequency separation circuits 301, 302 and 303, respectively, are inputted to the luminance signal generation circuit 330. A high frequency luminance signal Yh is thus generated. Since the high frequency luminance signal Yh is a signal having as many pixels as 1280 pixels by 480 pixels, the signal Yh is separated into odd-numbered dots Yho and even-numbered dots Yhe by the switchover circuit 340. By the processing of the switchover circuit 340, the display signal Wo to be supplied to the optical control element W having a resolution equivalent to that of the R, G and B optical control elements becomes a signal of 640 pixels by 480 pixels. Furthermore, the odd-numbered dots Yho are equally added to the display signals Ro, Go and Bo respectively of R, G and B. As a result, resultant pixels function as white pixels equivalently.

According to the present invention, full color display is made possible by the R, G and B optical control elements, in a low frequency region corresponding to a horizontal resolution of 640 lines. In a high frequency region corresponding to a horizontal resolution in the range of 640 to 1280 lines, the odd-numbered dots Yho of the high frequency luminance signal Yh is displayed as a white pixel by driving three optical control elements of R, G and B with the same signal (Yho). Furthermore, in the above described high frequency region, the newly added optical control element W displays the even-numbered dots Yhe of the high frequency luminance signal Yh. Although display is limited to only the luminance component, therefore, display with a horizontal resolution of up to 1280 lines becomes possible.

As for the human sense of sight, it is known that in general the resolution for the color signal is low and the resolution for the luminance signal is higher. By utilizing this characteristic in the transmission form of an HD (high definition) signal such as a high-vision signal including an NTSC system signal, the band of the color difference signal (U, V, R-Y, B-Y) is set to at most half of that of the luminance Y. Furthermore, in image compression systems such as JPEG and MPEG highly developed in recent years, there is used such a technique as to thin samples of the color difference signal at a ratio of 2 to 1 or 4 to 1 as compared with the luminance Y.

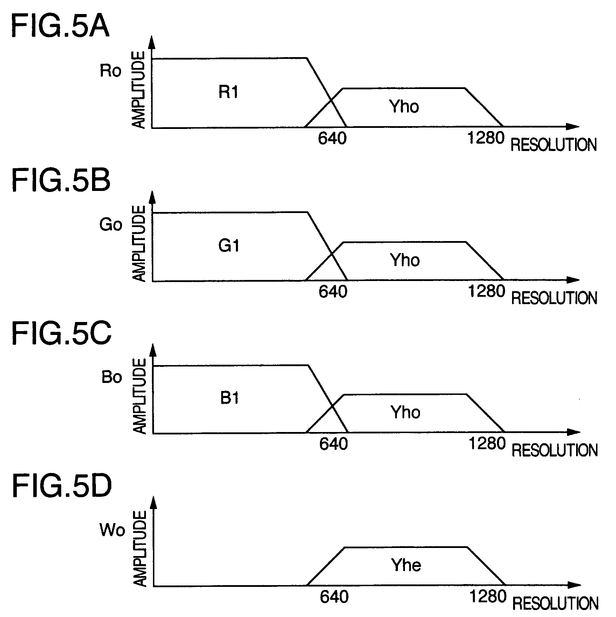

According to the present invention, full color display is possible in a region below the horizontal resolution of 640 lines which can be displayed by using the R, G and B basic pixels as shown in FIG. 5. As to the resolution in the range of 640 to 1280 lines located above the region, display of the luminance (Y) signal component can be conducted by using odd-numbered dots with R, G and B combined and even-numbered dots generated by the newly added W panel. Even if the resolution of the color signal is thus limited, there is obtained good conformity to the above described human visual characteristic in which the resolution concerning the color is low and resolution feeling depends on the luminance information. As a result, display of high resolution can be conducted without remarkable image quality degradation. In display of an ordinary video signal, display of high resolution becomes possible substantially without image quality degradation also on account of the fact that the band of the color difference signal is limited to half or less of that of the luminance signal in the process of transmission. Furthermore, a newly added optical control element is only one W panel having resolution equivalent to that of the R, G and B optical control elements. As compared with the case where a high resolution panel is used for each of R, G and B, therefore, it becomes possible to implement a display apparatus with remarkably low price and high resolution.

In the case where the pixel pitch ratio between the horizontal pixels and the vertical pixels in each optical control element in use (which are proportionate to Dh and Dv of the display section) is 1:1, pixels displayed with higher resolution become vertically long pixels having a pixel aspect ratio of 1:2. However, it can be converted to a desired pixel aspect ratio by changing the expansion ratio at the time of projection to the display section according to whether the direction is horizontal or vertical, with, for example, an anamorphic lens.

In FIG. 5, the amplitude of Yho and Yhe is smaller than that of the R, G and B basic pixels. In the high resolution region, display is conducted by using the additional pixels W and the white pixels obtained by combining R, G and B. Therefore, the luminance of Yho and Yhe may be half of that of the R, G and B in the low resolution region. As a matter of fact, Yho and Yhe have a partially overlapping region as shown in the pixel arrangement of FIG. 3. In order to maintain the resolution, the amplitude of Yho and Yhe may be made slightly larger than half of that of the R, G and B basic pixels instead of setting the amplitude of Yho and Yhe to just half of that of the R, G and B basic pixels. Furthermore, the amplitude of Yho and Yhe may be made larger in order to display a sharper image with the edge portion emphasized.

By the way, as for the high frequency luminance signal Yho inputted to the addition circuits 321, 322 and 323, it is applied to the R, G and B with the same level. In order to set the chromaticity coordinates to the white color displayed by the additional optical control element W, however, ratios applied to the R, G and B may be changed. At this time, chromaticity in white color display of a comparatively large area caused by the R, G and B basic elements corresponding to the low frequency region differs from the chromaticity of the high frequency luminance signal of an edge portion or the like. In such a configuration that a white color of desired chromaticity is obtained in the white color display using the R, G and B basic elements, however, display of a video signal can be conducted without remarkable visual degradation.

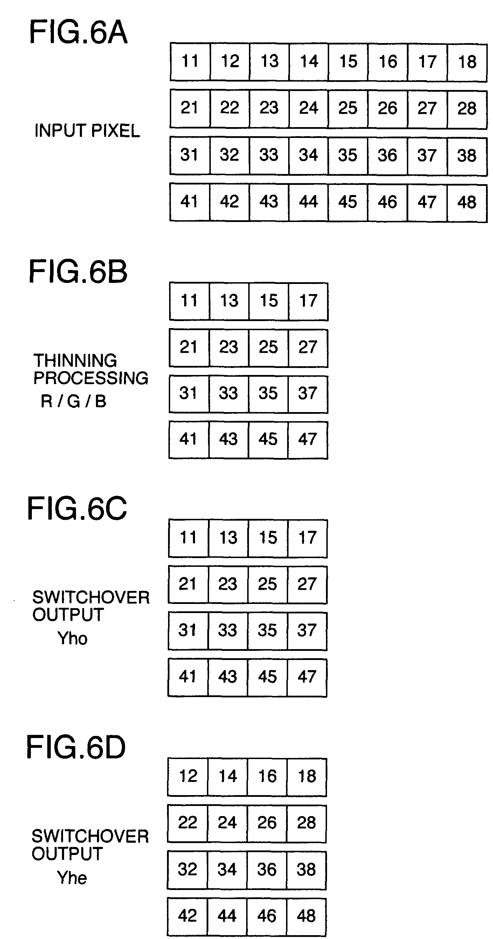

By referring to FIGS. 6A to 6D, concrete operation of the thinning processing circuits 311, 312 and 313 and the switchover circuit 340 shown in FIG. 4, conducted in the first embodiment will now be described.

FIG. 6A shows pixels inputted as RI, GI and BI. Supposing a signal having 8 pixels in the horizontal direction and 4 lines in the vertical direction in order to facilitate the description, the concrete operation will be described. In FIG. 6A, 11, 12, 13, 14, ... denote pixels of a first line, 21, 22, 23, 24, ... denote pixels of a second line, and [nm] denotes an mth pixel of an nth line. By the way, the actual input signal is inputted and processed in a raster scan form together with the horizontal and vertical synchronizing signals or the clock.

FIG. 6B shows output pixels thinned by the thinning circuits 311, 312 and 313. After being subjected to band limitation in the frequency separation circuits 301, 302 and 303, even-numbered pixels of each line are thinned and only odd-numbered pixels are outputted. The signal having 4 pixels in the horizontal direction and 4 lines in the vertical direction coincides with the resolution of each of the R, G and B optical control elements. Control of the emitted light quantity is effected by taking a pixel as the unit.

FIG. 6C shows the output Yho of the switchover circuit 340. Luminance information is generated from the high frequency component which cannot be represented by the R, G and B basic optical control elements. Only odd-numbered pixels corresponding to pixels located in the same positions as those of the R, G and B basic optical control elements are outputted. Furthermore, even-numbered pixels which cannot be displayed by the R, G and B basic optical control elements are displayed by the additional optical control element W as Yhe shown in FIG. 6D. Pixels of the R, G and B basic optical control elements and pixels of the additional optical control element W are arranged so that Yho and Yhe will be alternately disposed on the screen as shown in FIG. 3.

As for the luminance signal Yh of the high frequency component, therefore, pixels are not thinned and display of a resolution corresponding to all input pixels can be effected.

Owing to the processing heretofore described, high resolution display of 8 pixels by 4 lines can be implemented by using four optical control elements each having 4 pixels by 4 lines. Heretofore, description has been given by referring to optical control elements each having 4 pixels by 4 lines. By using the optical control elements each having 640 pixels by 480 lines heretofore described, however, display of 1280 pixels by 480 lines becomes possible. Furthermore, the embodiment is not restricted to these resolution values, but high resolution display of 2N pixels by M lines can be effected by using four optical control elements each having N pixels by M lines. For example, by using four optical control elements each having 800 pixels by 600 lines (corresponding to SVGA), display of 1600 pixels by 600 lines can be effected. Or by using four optical control elements each having 1024 pixels by 768 lines (corresponding to XGA), display of 2048 pixels by 768 lines can be effected.

In the present embodiment, the horizontal resolution is increased to twice by arranging pixels 200 obtained by the additional optical control element W so that the pixels 200 will be shifted from the pixels 100 by Dh/2 as shown in FIGS. 2 and 3. Alternatively, however, the vertical resolution may be increased to twice by arranging additional pixels W so that the additional pixels W will be shifted from the pixels 100 by Dv/2 in the vertical direction. At this time, high resolution display of N pixels by 2M lines is made possible by using four optical control elements each having N pixels by M lines.

Furthermore, by adding optical control elements of two kinds W1 and W2 respectively having pixels shifted in the horizontal direction by Dh/3 and pixels shifted in the horizontal direction by 2Dh/3, the horizontal resolution may be increased to three times. By using this configuration and five optical control elements of R, G, B, W1 and W2, display of 3N pixels by M lines may be effected.

In the embodiment heretofore described, the horizontal resolution or vertical resolution is increased by adding pixels shifted in either the horizontal direction or the vertical direction. Hereafter, there will now be described a configuration of a second embodiment in which both the horizontal resolution and the vertical resolution are increased by adding pixels shifted in both the horizontal direction and the vertical direction. In the same way as the foregoing embodiment, there will be described such a configuration that a 640 by 480 (corresponding to VGA) liquid crystal element is mainly used as an optical control element and a display apparatus capable of effecting display equivalent to 1280 pixels by 960 lines which are twice in horizontal resolution and vertical resolution is implemented.

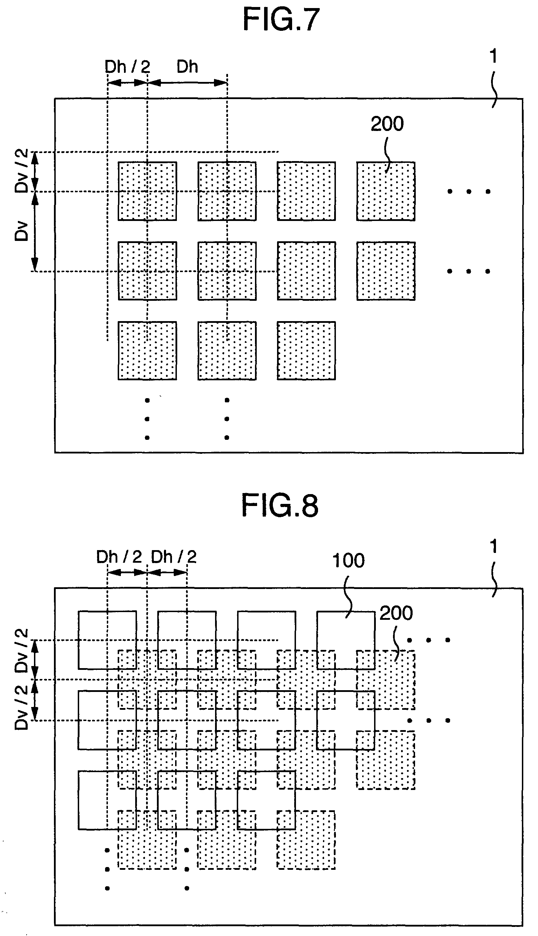

FIG. 7 shows positions of pixels 200 displayed on the display section 1 by the additional optical control element W. Pixels 100 displayed by the R, G and B basic optical control elements are arranged as shown in FIG. 1. The additional pixels 200 are displayed with a shift of Dh/2 in the horizontal direction and a shift of Dv/2 in the vertical direction. The numbers of lines in the horizontal direction and vertical direction are the same as those of the R, G and B pixels 100 (640 by 480). Furthermore, the horizontal pixel pitch Dh and vertical pixel pitch Dv of the pixels are made equal to those of the R, G and B pixels 100.

In the display section 1, therefore, the pixels 100 generated by the R, G and B basic optical control elements and the pixels 200 generated by the additional optical control element W are arranged with a pitch of Dh/2 in the horizontal direction and a pitch of Dv/2 in the vertical direction as shown in FIG. 8. The R, G and B basic pixels 100 and the additional pixels W 200 form a pattern having pixels shifted in phase by Dh/2 on each of lines arranged with a pitch of Dv/2, i.e., a so-called quincunx pattern of a die.

Signal processing to be conducted when implementing high resolution display by using the pixel arrangement shown in FIG. 8 can be implemented by using essentially the same configuration as that of FIG. 4 which is the block diagram of the first embodiment. Since details of operation of each block are different, however, operation of each section will hereafter be described by referring to FIG. 4.

FIG. 4 shows a configuration of a signal processing circuit 3 for processing input signals RI, GI and BI respectively corresponding to red (R), green (G) and blue (B) and converting the input signals to display signals Ro, Go, Bo and Wo respectively for four optical control elements of R, G, B and W. By the way, the input signals RI, GI and BI are signals of 1280 horizontal pixels by 960 lines, whereas the display signals Ro, Go, Bo and Wo are display signals of 640 horizontal pixels by 480 pixels.

In FIG. 4, frequency separation circuits 301, 302 and 303 conduct separation into a low frequency component (fL) corresponding to 640 by 480 pixels which can be displayed by using the R, G and B panels, and a high frequency component (fH) exceeding 640 by 480 pixels. To be concrete, a cascade connection of an LPF of the vertical direction and an LPF of the horizontal direction extracts the low frequency component fL corresponding to 640 pixels by 480 lines in the two-dimensional frequency of the vertical direction and the horizontal direction, and separates the high frequency component fH which exceeds this resolution. The thinning processing circuits 311, 312, and 313 conduct processing of thinning pixels of the low frequency component (fL) of the RI, GI and BI at a ratio of 2 to 1 in the horizontal direction and at a ratio of 2 to 1 in the vertical direction. Owing to the frequency separation and thinning processing, the signals RI, GI and BI of 1280 horizontal pixels by 960 lines can be inputted to optical control elements each having 640 horizontal pixels by 480 lines.

A luminance signal generation circuit 330 generates a high frequency luminance signal Yh from RfH, GfH and BfH which are two-dimensional high frequency components (fH) respectively of the RI, GI and BI. At this time, in order to prevent aliasing disturbance when thinning is conducted to yield a quincunx pattern and display is effected, diagonal resolution information is reduced and a result is outputted as the high frequency luminance signal Yh. The switchover circuit 340 outputs odd-numbered pixels of odd-numbered lines of the high frequency luminance signal Yh to Yho and even-numbered dots of even-numbered lines to Yhe, and conducts thinning processing on other pixels. As a result, both Yho and Yhe become signals of 640 horizontal pixels by 480 lines. By the way, the signal of Yho is equally applied to addition circuits 321, 322 and 323, and display is effected as white pixels by combining the R, G and B pixels. Furthermore, Yhe is inputted to an additional optical control element W, and luminance information is displayed as white pixels together with Yho.

By the operation heretofore described, a signal which has a low frequency in both the horizontal and vertical directions and which can be represented by the R, G and B basic optical control elements is displayed by the R, G and B basic optical control elements via the frequency separation circuits 301, 302 and 303, the thinning processing circuits 311, 312 and 313, and the addition circuits 321, 322 and 323. As for information of a high frequency component which cannot be displayed by the R, G and B basic optical control elements, luminance information can be displayed as Yho and Yhe.

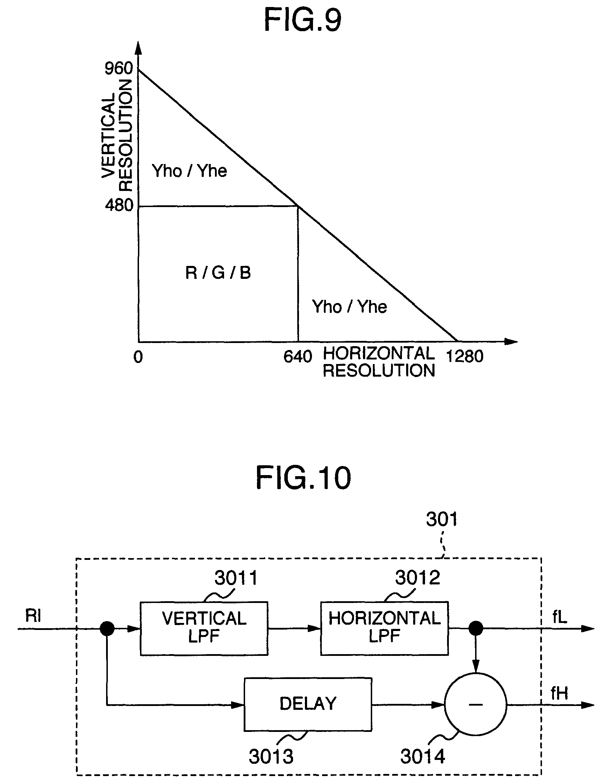

FIG. 9 is a diagram showing resolution represented by the second embodiment in a two-dimensional frequency domain. As for information having horizontal resolution of 640 lines or less and vertical resolution of 480 lines or less, full color display is effected by the R, G and B basic optical control elements. As for information having resolution which exceeds this, display of luminance information is effected by pixels of the quincunx pattern composed of Yho using the R, G and B basic pixels as white pixels and Yhe generated by additional pixels W.

FIG. 10 is a block diagram showing a concrete configuration of the frequency separation circuit 301 shown in FIG. 4, in the second embodiment. In FIG. 10, numeral 301 denotes a frequency separation circuit for separating an input RI into a low frequency component RfL corresponding to 640 pixels by 480 lines and a high frequency component RfH exceeding that resolution. Numeral 3011 denotes a vertical LPF, 3012 a horizontal LPF, 3013 a delay circuit, and 3014 a subtraction circuit. The vertical LPF 3011 functions to limit the vertical resolution to approximately half. The vertical LPF 3011 can be implemented with a transversal filter using a line memory as a unit delay element. Furthermore, the horizontal LPF 3012 functions to limit the horizontal resolution to approximately half. The horizontal LPF 3012 can be implemented with a transversal filter using a delay element of one pixel unit composed of a flip-flop circuit or the like. For example, each of the vertical LPF 3011 and the horizontal LPF 3012 may be formed of a transversal filter having three taps and coefficients [0.25, 0.5. 0.25]. By using the vertical LPF 3011 and the horizontal LPF 3012, a signal fL limited to half in both the horizontal resolution and vertical resolution can be obtained.

The delay circuit 3013 is a delay circuit for delaying the signal RI by a time corresponding to processing delays of the vertical LPF 3011 and the horizontal LPF 3012 so as to align in phase two signals inputted to the subtraction circuit 3014. The subtraction circuit 3014 subtracts the band-limited signal fL from the delayed input signal RI and thereby outputs a high frequency component fH. By the configuration heretofore described, separation into the low frequency component which can be displayed by using the R, G, and B basic optical control elements and the high frequency component fH exceeding that can be effected.

While FIG. 10 shows a concrete configuration example of the frequency separation circuit 301 in the second embodiment, separation according to the vertical resolution is not conducted in the first embodiment. In the first embodiment, therefore, the vertical LPF 3011 becomes unnecessary and the input RI is inputted directly to the horizontal LPF 3012. At this time, the delay time of the delay circuit 3013 is made equal to the processing delay time of only the horizontal LPF 3012.

Heretofore, the concrete configuration of the frequency separation circuit 301 of RI shown in FIG. 4 has been described. Each of the frequency separation circuits 302 and 303 for processing GI and BI may have the same configuration.

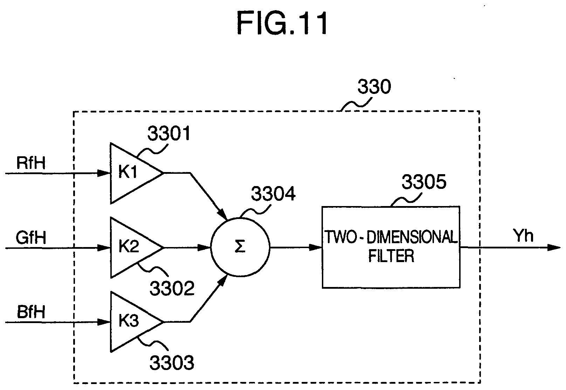

A concrete configuration example of the luminance signal generation circuit 330 shown in FIG. 4, in the second embodiment will now be described by referring to FIG. 11. In FIG. 11, numeral 330 denotes a luminance signal generation circuit for generating a high frequency luminance signal Yh from the high frequency components RfH, GfH and BfH respectively of the R, G and B. Numerals 3301, 3302 and 3303 denote coefficient circuits respectively having coefficient values K1, K2 and K3. Numeral 3304 denotes an addition circuit. Numeral 3305 denotes a two-dimensional filter for reducing diagonal resolution information. The high frequency components RfH, GfH and BfH respectively of R, G and B are inputted to the coefficient circuits 3301, 3302 and 3303, and multiplied by predetermined coefficients K1, K2 and K3, respectively. Resultant products are added together in the addition circuit 3304. A resultant sum is converted to a luminance signal (Y). The coefficients K1, K2 and K3 differ depending upon the chromaticity coordinates of basic pixels and white balance setting. To be concrete, however, the coefficient concerning R is set to K1 = 0.3, the coefficient concerning G is set to K2 = 0.6, and the coefficient concerning B is set to K2 = 0.1. An output of the addition circuit 3304 is inputted to the two-dimensional filter 3305. In the two-dimensional filter 3305, the diagonal resolution information is reduced so as not to generate aliasing disturbance when pixels are thinned to yield a quincunx pattern. A resultant output of the two-dimensional filter 3305 is outputted as the high frequency luminance signal Yh. The concrete configuration of the two-dimensional filter can be implemented by using a 9-tap two-dimensional filter which refers to 3 by 3 pixels adjacent in the horizontal and vertical directions. To be concrete, coefficients corresponding to 3 by 3 pixels may be set as follows.

$$[-1/16]\ [+1/8]\ [-1/16]$$

[+1/8 ] [+3/4] [+1/8 ]

[-1/16] [+1/8] [-1/16]

By using the configuration heretofore described, the high frequency luminance signal Yh can be generated from the high frequency components RfH, GfH and BfH respectively of R, G and B.

In the first embodiment, pixel thinning for yielding a quincunx pattern is not conducted. Therefore, the two-dimensional filter 3035 becomes unnecessary, and the output of the addition circuit 3034 is outputted as the high frequency luminance signal Yh.

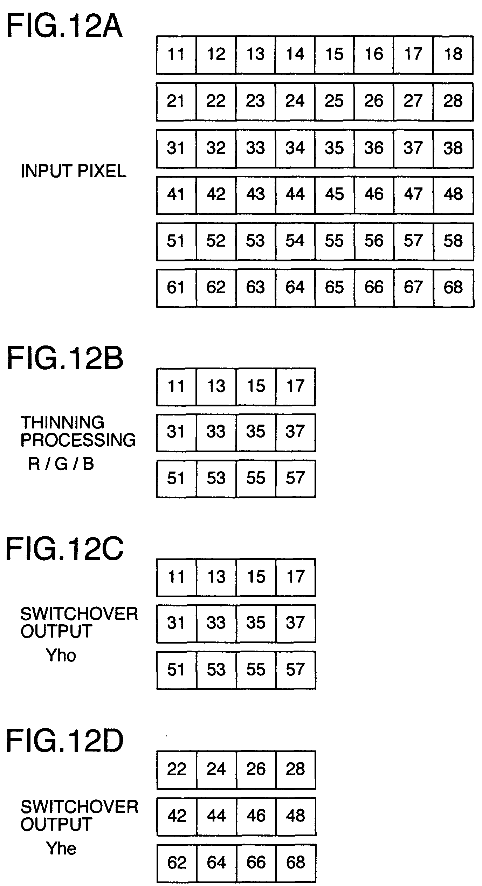

By referring to FIGS. 12A to 12D, concrete operation of the thinning processing circuits 311, 312 and 313 and the switchover circuit 340 shown in FIG. 4, conducted in the second embodiment will now be described.

FIG. 12A shows pixels inputted as RI, GI and BI. Supposing a signal having 8 pixels in the horizontal direction and 6 lines in the vertical direction in order to facilitate the description, the concrete operation will be described. In FIG. 12A, 11, 12, 13, 14, ... denote pixels of a first line, 21, 22, 23, 24, ... denote pixels of a second line, and [nm] denotes an mth pixel of an nth line. By the way, the actual input signal is inputted and processed in a raster scan form together with the horizontal and vertical synchronizing signals or the clock.

FIG. 12B shows output pixels thinned by the thinning circuits 311, 312 and 313. After being subjected in the frequency separation circuits 301, 302 and 303 to band limitation in the horizontal and vertical directions, even-numbered pixels of even-numbered lines are thinned and only odd-numbered pixels of odd-numbered lines are outputted. By this thinning processing, the input signal having 8 pixels in the horizontal direction and 6 lines in the vertical direction is converted to a signal having 4 pixels in the horizontal direction and 3 lines in the vertical direction. The signal having 4 pixels in the horizontal direction and 3 lines in the vertical direction coincides with the resolution of each of the R, G and B optical control elements. Control of the emitted light quantity is effected by taking a pixel as the unit.

FIG. 12C shows the output Yho of the switchover circuit 340. Luminance information is generated from the high frequency component which cannot be represented by the R, G and B basic optical control elements. Only odd-numbered pixels of odd-numbered lines corresponding to pixels located in the same positions as those of the R, G and B basic optical control elements are outputted. Furthermore, even-numbered pixels of even-numbered lines of the high frequency luminance signal are displayed by additional optical control element W as Yhe shown in FIG. 12D. Pixels of the R, G and B basic optical control elements and pixels of the additional optical control element W are arranged so that Yho and Yhe will be arranged on the screen in a quincunx pattern as shown in FIG. 8. At this time, even-numbered pixels of odd-numbered lines and odd-numbered pixels of even-numbered lines are thinned out. Although not shown, there is provided such a configuration as to prevent aliasing disturbance from being caused on the two-dimensional frequency by the two-dimensional filter 3305. Owing to such a configuration, resolution information of the range as shown in FIG. 9 can be displayed.

Owing to the processing heretofore described, high resolution display of 8 pixels by 6 lines can be implemented by using four optical control elements each having 4 pixels by 3 lines. Heretofore, description has been given by referring to optical control elements each having 4 pixels by 3 lines. By using the optical control elements each having 640 pixels by 480 lines heretofore described, however, display of 1280 pixels by 960 lines becomes possible. Furthermore, the embodiment is not restricted to these resolution values, but high resolution display of 2N pixels by 2M lines can be effected by using four optical control elements each having N pixels by M lines. For example, by using four optical control elements each having 800 pixels by 600 lines (corresponding to SVGA), display of 1600 pixels by 1200 lines can be effected. Or by using four optical control elements each having 1024 pixels by 768 lines (corresponding to XGA), display of 2048 pixels by 1536 lines can be effected.

According to the present invention, full color display is made possible by the R, G and B optical control elements, in a low frequency region corresponding to a horizontal resolution of 640 lines. In a high frequency region corresponding to a horizontal resolution in the range of 640 to 1280 lines, the odd-numbered dots Yho of the high frequency luminance signal Yh is displayed as a white pixel by driving three optical control elements of R, G and B with the same signal (Yho). Furthermore, in the above described high frequency region, the newly added optical control element W displays the even-numbered dots Yhe of the high frequency luminance signal Yh. Although display is limited to only the luminance component, therefore, display with a horizontal resolution of up to 1280 lines becomes possible.

According to the second embodiment of the present invention, full color display is possible in a region below the horizontal resolution of 640 lines and the vertical resolution of 480 lines which can be displayed by using the R, G and B basic pixels as shown in FIG. 9. In a region of horizontal resolution in a range of 640 to 1280 lines and vertical resolution in a range of 480 to 960 lines, display of the luminance (Y) signal component can be conducted by using Yho dots with R, G and B combined and Yhe dots of the newly added W panel. Even if the resolution of the color signal is thus limited, there is obtained good conformity to the human visual characteristic in which the resolution concerning the color is low and resolution feeling depends on the luminance information. As a result, display of high resolution can be conducted without remarkable image quality degradation. Furthermore, in typical natural images, concentration of energy on oblique high resolution information is low. In the human visual characteristic, sensitivity to high resolution in the oblique direction is low. Without remarkable image quality degradation, therefore, display of substantially high resolution feeling can be effected.

In the same way as the first embodiment, a newly added optical control element is only one W panel having resolution equivalent to that of the R, G and B optical control elements. As compared with the case where a high resolution panel is used for each of R, G and B, therefore, it becomes possible to implement a display apparatus with remarkably low price and high resolution.

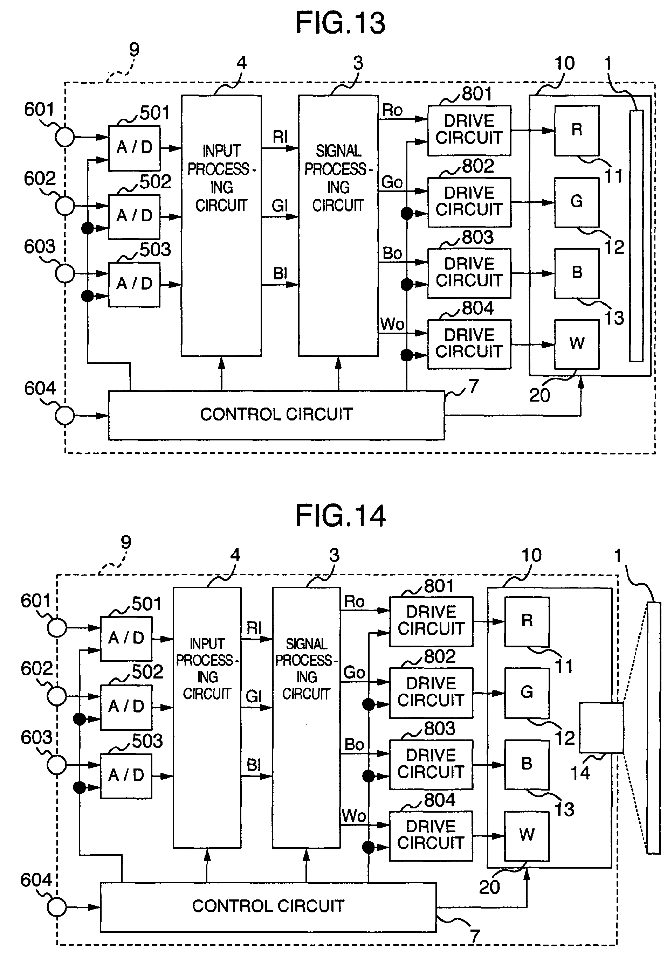

A configuration of a display apparatus 9 according to the present invention will now be described by referring to FIG. 13.

In FIG. 13, numerals 601, 602 and 603 denote video signal input terminals, and numeral 604 denotes a synchronizing signal input terminal. Numerals 501, 502 and 503 denote A/D conversion circuits. Numeral 4 denotes an input processing circuit for conducting conversion in input signal form and the number of pixels. Numeral 3 denotes a signal processing circuit having the configuration shown in FIG. 4. Numeral 7 denotes a control circuit. Numerals 801, 802, 803 and 804 denote drive circuits for driving liquid crystal panels. Numeral 10 denotes an optical combining section. Numerals 11, 12, 13 and 20 denote liquid crystal panels provided in the optical combining section 10. Numeral 1 denotes a display screen. Numeral 9 denotes a display apparatus of the present invention.

From the input terminals 601, 602 and 603, color video signals such as R, G and B, or Y, R-Y and B-Y are inputted. From the input terminal 604, horizontal and vertical synchronizing signals are inputted. On the basis of the synchronizing signals inputted from the input terminal 604, the control circuit 7 generates a basic clock and control signals supplied to various components. The A/D conversion circuits 501, 502 and 503 convert video signals inputted from the input terminals 601, 602 and 603 to digital signals. The input processing circuit 4 is a scan converter for conducting conversion of the signal form and resolution on the video signals converted in the A/D conversion circuits 501, 502 and 503 to digital signals. The video signals of various forms inputted from the terminals 601, 602 and 603 are converted to signals RI, GI and BI of the RGB form each having 1280 pixels in the horizontal direction and 960 lines in the vertical direction. Operation of the signal processing circuit 3 is based on the second embodiment heretofore described. The signal processing circuit 3 generates display signals Ro, Go, Bo and Wo for controlling the R, G and B basic optical control elements as well as an optical control element W. The drive circuits 801 to 804 converts the signals to voltages or time points required for driving the liquid crystal panels 11, 12, 13 and 20. Each of the liquid crystal panels 11, 12, 13 and 20 is a liquid crystal panel having 640 pixels in the horizontal direction and 480 lines in the vertical direction. The optical combining section 10 controls the R, G, B and W lights sources by using the liquid crystal panels 11, 12, 13 and 20, and conducts optical combining and display so as to yield the pixel arrangement shown in FIG. 8 on the display section 1.

Owing to the configuration heretofore described, high resolution display equivalent to 1280 pixels in the horizontal direction and 960 lines in the vertical direction can be effected by using four inexpensive liquid crystal panels each having 640 pixels in the horizontal direction and 480 lines in the vertical direction.

A configuration of projection type according to the present invention will now be described by referring to FIG. 14.

In FIG. 14, numeral 14 denotes an projection lens provided in the optical combining section 10. Numeral 1 denotes a display screen provided outside the display apparatus. Numeral 9 denotes an apparatus of the present invention. Other components are the same as those of FIG. 13.

The configuration example shown in FIG. 13 is a display apparatus of back projection type in which the display apparatus and the display screen are formed as one body. A configuration of FIG. 14 differs from the configuration of FIG. 13 in that it is a display apparatus of front projection type in which an image is projected onto the external display screen 1 by the projection lens 14 provided in the optical combining section 10. Other components of the configuration of FIG. 14 is the same as those of the configuration of FIG. 13.

Owing to the configuration of the optical combining section heretofore described, the present invention can be applied to both the back projection display apparatus and front projection apparatus. As for processing such as bilateral inversion or upside down inversion to be conducted according to the necessity in the optical combining section, desired inversion processing may be conducted in the drive circuits 801 to 804 or the input processing circuit 4.

When implementing a display apparatus with the pixel arrangement shown in FIG. 8, the optical combining section 10 may have such a resolution characteristic as to reduce the diagonal resolution information. In general, an optical system having a lens includes a process for conducting conversion to a spatial frequency domain. By controlling the transmission factor of the diagonal resolution information in the spatial frequency domain, therefore, an optical system with the diagonal resolution information reduced can be implemented. By doing so, a favorable image quality having smooth horizontal and vertical edges can be obtained.

By the way, in the case where the input signals are signals of a personal computer, a work station, or the like, it is possible to give up pixel addition using the optical control element W and conduct display by using only the R, G and B basic elements. By thus effecting switchover, it is possible to effect personal computer display according to XGA of 1024 pixels by 768 lines by using only the R, G and B basic pixels, obtain high resolution of 2048 pixels by 1536 pixels by adding W pixels according to the present invention, and display a hi-vision signal having 1920 pixels by 1080 pixels.

According to the present invention, display of high resolution can be implemented without image quality degradation by using four inexpensive optical control elements of low resolution.

As a result, an inexpensive display apparatus of high resolution can be implemented.

In addition, display of a full color computer image and display of a high resolution video signal can be implemented by using a single display apparatus.

## Claims

1. A color display apparatus (9) for controlling optical control elements based on input signals and displaying an image on a display section (1), said display apparatus comprising:

   basic optical control elements (11, 12, 13) for displaying color images of R (red), G (green), and B (blue);
   an additional optical control element (20) of W (white color); and
   optical combining means (10) for displaying R, G and B basic pixels (100) generated by said basic optical control elements, in substantially same positions, and arranging and displaying W pixels. (200) generated by sad additional optical control element, between adjacent pixels among said basic pixels.

2. A color display apparatus according to claim 1, wherein said optical combining means (10) arranges and displays the W pixels (200) generated by said additional optical control element, with a shift substantially equal to Dh/2 in a horizontal direction from said basic pixels (100) generated by said basic optical control elements, where Dh is a horizontal pixel pitch of said basic pixels generated by said basic optical control elements.

3. A color display apparatus according to claim 1, wherein said optical combining means (10) arranges and displays the W pixels (200) generated by said additional optical control element, with a shift substantially equal to Dh/2 in a horizontal direction and a shift substantially equal to Dv/2 in a vertical direction from said basic pixels (100) generated by said basic optical control elements, where Dh is a horizontal pixel pitch of said basic pixels generated by said basic optical control elements and Dv is a vertical pixel pitch of said basic pixels generated by said basic optical control elements.

4. A color display apparatus (9) for controlling optical control elements based on input signals and displaying an image on a display section (1), said display apparatus comprising:

   basic optical control elements (11, 12, 13) for displaying color images of R (red), G (green), and B (blue);
   an additional optical control element (20) of W (white color);
   optical combining means (10) for displaying R, G and B basic pixels (100) generated by said basic optical control elements, in substantially same positions, and arranging and displaying W pixels (200) generated by sad additional optical control element, between adjacent pixels among said basic pixels;
   frequency separation means (301, 302, 303) for separating input signals (RI, GI, BI) into high frequency components (RfH, GfH, BfH) and low frequency components;
   luminance signal generation means (330) for generating a first luminance signal (Yhe) and a second luminance signal (Yho) by using said high frequency components;
   drive means (804) for driving said additional optical control element W based on said first luminance signal;
   addition means (321, 322, 323) for adding said second luminance signal and said low frequency components and thereby generating basic pixel drive signals (Ro, Go, Bo); and
   drive means (801, 802, 803) for driving said basic optical control elements of R (red), G (green), and B (blue) based on said basic pixel drive signals.

5. A color display apparatus according to claim 4, wherein said optical combining means (10) arranges and displays the W pixels (200) generated by said additional optical control element, with a shift substantially equal to Dh/2 in a horizontal direction from said basic pixels (100) generated by said basic optical control elements, where Dh is a horizontal pixel pitch of said basic pixels generated by said basic optical control elements.

6. A color display apparatus according to claim 4, wherein said optical combining means (10) arranges and displays the W pixels (200) generated by said additional optical control element, with a shift substantially equal to Dh/2 in a horizontal direction and a shift substantially equal to Dv/2 in a vertical direction from said basic pixels (100) generated by said basic optical control elements, where Dh is a horizontal pixel pitch of said basic pixels generated by said basic optical control elements and Dv is a vertical pixel pitch of said basic pixels generated by said basic optical control elements.

7. A color display apparatus according to claim 4, wherein said frequency separation means (301, 302, 303) have such characteristics as to separate the input signals into low frequency components which can be displayed by said basic optical control elements without degradation and high frequency components other than said low frequency components.

8. A color display apparatus (9) for controlling optical control elements based on input signals and displaying an image on a display section (1), said display apparatus comprising:

basic optical control elements (11, 12, 13) for displaying color images of R (red), G (green), and B (blue) ;
an additional optical control element (20) of W (white color);
optical combining means (10) for displaying R, G and B basic pixels (100) generated by said basic optical control elements, in substantially same positions, and arranging and displaying W pixels (200) generated by sad additional optical control element, between adjacent pixels among said basic pixels, while shifting a phase by taking a pixel as unit and taking a line as unit, so as to form a quincunx form of a die;
frequency separation means (301, 302, 303) for separating input signals (RI, GI, BI) into high frequency components (RfH, GfH, BfH) and low frequency components, in a two-dimensional frequency domain of horizontal and vertical directions;
luminance signal generation means (330) for generating a first luminance signal (Yhe) and a second luminance signal (Yho) by using said high frequency components;
drive means (804) for driving said additional optical control element W based on said first luminance signal;
addition means (321, 322, 323) for adding said second luminance signal and said low frequency components and thereby generating basic pixel drive signals (Ro, Go, Bo); and
drive means (801, 802, 803) for driving said basic optical control elements of R (red), G (green), and B (blue) based on said basic pixel drive signals.

9. A color display apparatus according to claim 8, wherein said frequency separation means comprises:

a vertical low pass filter (3011) for limiting resolution in a vertical direction; and
a horizontal low pass filter (3012) for limiting resolution in a horizontal direction.

10. A color display apparatus according to claim 8, wherein said luminance signal generation means (330) comprises a two dimensional low pass filter (3305) for limiting diagonal resolution.

11. A color display apparatus according to claim 8, wherein said optical combining means (10) has such a spatial resolution characteristic as to limit diagonal resolution.

12. A color display apparatus (9) for controlling optical control elements based on input signals and displaying an image on a display section (1), said display apparatus comprising:

four optical control elements (11, 12, 13, 20) of R (red), G (green), B (blue), and W (white color) ;
frequency separation means (301, 302, 303) for separating input signals (RI, GI, BI) into high frequency components (RfH, GfH, BfH) and low frequency components, in a two-dimensional frequency domain;
drive means (801, 802, 803) for driving said optical control elements of R (red), G (green), and B (blue) based on said low frequency components; and
luminance signal generation means (330) for generating a luminance signal (Yh) by using said high frequency components, said luminance signal being displayed by white pixels generated by said optical control elements of R (red), G (green), and B (blue) and pixels generated by said W (white color) optical control element.

13. A color display apparatus according to claim 12, wherein four optical control elements of R (red), G (green), B (blue), and W (white color) are equal in horizontal and vertical resolution.

# FIG.1

# FIG.2

# FIG.3

# FIG.4

FIG.5A

AMPLITUDE

Ro

R1

Yho

640          1280 RESOLUTION

FIG.5B

AMPLITUDE

Go

G1

Yho

640          1280 RESOLUTION

FIG.5C

AMPLITUDE

Bo

B1

Yho

640          1280 RESOLUTION

FIG.5D

AMPLITUDE

Wo

Yhe

640          1280 RESOLUTION

# FIG.6A

INPUT PIXEL

| 11 | 12 | 13 | 14 | 15 | 16 | 17 | 18 |
|----|----|----|----|----|----|----|----|
| 21 | 22 | 23 | 24 | 25 | 26 | 27 | 28 |
| 31 | 32 | 33 | 34 | 35 | 36 | 37 | 38 |
| 41 | 42 | 43 | 44 | 45 | 46 | 47 | 48 |

# FIG.6B

THINNING
PROCESSING
R / G / B

| 11 | 13 | 15 | 17 |
|----|----|----|----|
| 21 | 23 | 25 | 27 |
| 31 | 33 | 35 | 37 |
| 41 | 43 | 45 | 47 |

# FIG.6C

SWITCHOVER
OUTPUT
Yho

| 11 | 13 | 15 | 17 |
|----|----|----|----|
| 21 | 23 | 25 | 27 |
| 31 | 33 | 35 | 37 |
| 41 | 43 | 45 | 47 |

# FIG.6D

SWITCHOVER
OUTPUT
Yhe

| 12 | 14 | 16 | 18 |
|----|----|----|----|
| 22 | 24 | 26 | 28 |
| 32 | 34 | 36 | 38 |
| 42 | 44 | 46 | 48 |

# FIG.7

# FIG.8

# FIG.9

# FIG.10

# FIG.11

330

3301

RfH ──► K1

3305

3304

GfH ──► K2 ──► Σ ──► TWO-DIMENSIONAL FILTER ──► Yh

3302

BfH ──► K3

3303

# FIG.12A

INPUT PIXEL

| 11 | 12 | 13 | 14 | 15 | 16 | 17 | 18 |
|----|----|----|----|----|----|----|----|
| 21 | 22 | 23 | 24 | 25 | 26 | 27 | 28 |
| 31 | 32 | 33 | 34 | 35 | 36 | 37 | 38 |
| 41 | 42 | 43 | 44 | 45 | 46 | 47 | 48 |
| 51 | 52 | 53 | 54 | 55 | 56 | 57 | 58 |
| 61 | 62 | 63 | 64 | 65 | 66 | 67 | 68 |

# FIG.12B

THINNING
PROCESSING
R / G / B

| 11 | 13 | 15 | 17 |
|----|----|----|----|
| 31 | 33 | 35 | 37 |
| 51 | 53 | 55 | 57 |

# FIG.12C

SWITCHOVER
OUTPUT
Yho

| 11 | 13 | 15 | 17 |
|----|----|----|----|
| 31 | 33 | 35 | 37 |
| 51 | 53 | 55 | 57 |

# FIG.12D

SWITCHOVER
OUTPUT
Yhe

| 22 | 24 | 26 | 28 |
|----|----|----|----|
| 42 | 44 | 46 | 48 |
| 62 | 64 | 66 | 68 |

# FIG.13

# FIG.14